# EUROPÄISCHE PATENTSCHRIFT

(11) **EP 0 894 985 B1**
(45) Veröffentlichungstag und Bekanntmachung des Hinweises auf die Patenterteilung: **02.10.2002**
(21) Anmeldenummer: 98112266.6
(22) Anmeldetag: 02.07.1998
(51) Int. Cl.: F16B 7/04

(54) **Gestell, insbesondere für Möbel, aus lösbar durch einen Verbinder miteinander kuppelbaren Profilstangen**
Frame, in particular for furniture elements, consisting of profiled rods releasably connected by a coupling member
Echafaudage, notamment pour éléments de meubles, à barres profilées raccordées de manière détachable par un connecteur

(30) Priorität: 31.07.1997 DE 19733023
(43) Veröffentlichungstag der Anmeldung: 03.02.1999
(73) Patentinhaber: Vieler International KG, D-58642 Iserlohn (DE)
(72) Erfinder: Hackenberg, Dieter, 58453 Witten (DE)
(74) Vertreter: Mentzel, Norbert, Dipl.-Phys.

(56) Entgegenhaltungen:
- EP-A- 0 000 525
- EP-A- 0 059 463
- EP-A- 0 254 288
- EP-A- 0 412 339
- EP-A- 0 570 668
- WO-A-90/07652
- DE-A- 4 225 926
- DE-C- 3 153 232
- DE-U- 9 412 773
- US-A- 4 974 987

## Beschreibung

Die Erfindung richtet sich auf ein Gestell mit einem Verbinder für miteinander kuppelbare Profilstangen, von denen wenigstens einige hinterschnittene Nuten und andere einen stirnseitigen Hohlraum zur Aufnahme des Verbinders aufweisen. Der Verbinder besteht aus mindestens zwei profilierten Platten, die zwar durch eine Federkraft voneinander weggedrückt werden, aber durch Drehbetätigen eines Druckglieds gegeneinander bewegt werden. Dabei ist die eine Platte mit einem Hakenende versehen, das mindestens einen Kupplungshaken besitzt, der bei montiertem Verbinder aus dem Stirnende der Profilstange herausragt, zum Kuppeln in die Nut der anderen Profilstange ragt und dort im Kupplungsfall die Nutwand hintergreift. Diese Platte soll daher nachfolgend "Kupplungsplatte" genannt werden. Demgegenüber wird die andere Platte im Montagefall ortsfest im Hohlraum der Profilstange positioniert. Daher soll diese Platte als "Basisplatte" bezeichnet werden.

Bei dem bekannten Gestell dieser Art (DE 16 50 975 A, Fig. 1) besteht der Verbinder aus zwei spiegelbildlich zueinander angeordneten Kupplungsplatten mit voneinander wegweisenden Kupplungshaken und aus zwei an gegenüberliegenden Innenflächen des Hohlraums durch eine Verzahnung ortsfest positionierten Basisplatten. Als Druckglied verwendet man einen Gewindestift, der in einer Gewindebohrung der einen Kupplungsplatte verschraubbar ist und sich endseitig an der anderen Kupplungsplatte abstützt. Durch Einschrauben des Gewindestifts werden die beiden Hakenenden auseinander gespreizt und fahren im Kupplungsfall hinter die beidseits der Nut liegenden Nutwände der anderen Profilstange. Außer der unmittelbar vom Druckglied erzeugten Spreizbewegung der beiden Kupplungsplatten kommt es auch zu einer mittelbaren Längsbewegung der beiden Kupplungsplatten gegenüber den Basisplatten. Entfernt vom Angriffspunkt des Druckglieds besitzen die beiden Kupplungsplatten Anlagestellen für eine an den beiden Basisplatten jeweils vorgesehenen Schrägflächen. Die Schrägflächen entstehen durch spiegelbildliche Abwinkelungen der Basisplatten, die in Durchbrüche der zugehörigen beiden Hakenplatten eingreifen. Die Innenenden der beiden Kupplungsplatten bilden bei der Spreizbewegung ein Drehgelenk. Beim Einschrauben des Gewindestifts gleiten die in den Plattendurchbrüchen vorgesehenen Anlagestellen an den Schrägflächen entlang. Dadurch werden die beiden spiegelbildlichen Kupplungshaken im Kupplungsfall gegen die zugehörigen Nutwände der anderen Profilstange herangezogen.

Ein Nachteil dieses bekannten Verbinders besteht in dem unverzichtbaren doppelten Aufwand an zwei Kupplungsplatten und zwei Basisplatten. Eine Reduzierung der Bauteile auf nur eine Kupplungs- und eine Basisplatte mit einem querbeweglichen Druckglied, welches sowohl eine Längs- als auch eine Querbewegung der Kupplungsplatte steuert, erschien unmöglich. Ein weiterer wesentlicher Nachteil ist die weiche, eine Relativbewegung zueinander erlaubende Verbindung zwischen den beiden gekuppelten Profilstangen und der fehlenden Fixierung der beiden Kupplungsplatten im Hohlraum bei entkuppelten Profilstangen. Die beiden Kupplungsstangen werden nämlich durch zwei spiegelbildlich zueinander angeordnete Blattfedern gegeneinander gedrückt gehalten, die sich an den beiden Basisplatten abstützen. Die beiden Blattfedern drücken die Kupplungsplatten zwar gegeneinander, begründen aber ein seitliches Spiel gegenüber den beiden Basisplatten, wodurch die Lage der beiden Kupplungshaken in Spreizbewegungsrichtung unfixiert bleibt. Weder im Entkupplungsfall noch im Kupplungsfall läßt sich das seitliche Spiel zwischen den Kupplungsplatten und Basisplatten beseitigen. Weil der Gewindestift mit der einen Kupplungsplatte in Gewindeeingriff steht und die Kupplungsplatten sich beim Einschrauben des Gewindestifts längsbewegen sollen, muß ein ausreichendes Längsspiel zwischen dem Gewindestift und einem in der Profilstange vorgesehenen Durchbruch für den Zugang des Betätigungsendes vom Stift vorliegen. Dies führt aber zu einer undefinierten Längslage der beiden Kupplungsplatten im Hohlraum, die mindestens im Entkupplungsfall, aber im gewissen Sinne auch im Kupplungsfall, eine Veränderung der Längslage des Verbinders im Hohlraum der ihn aufnehmenden Profilstange erlaubt. Damit ist die Sicherheit der Verbindung der beiden miteinander gekuppelten Profilstangen bei dem bekannten Gestell gefährdet.

Es gibt Verbinder anderer Art, die mit einer Gewindeschraube eine einzelne Kupplungsplatte gegenüber einer einzigen Basisplatte kupplungs- und entkupplungswirksam zu steuern erlauben (DE 17 75 802 A), doch kann hier eine Längsbewegung der Kupplungsplatte mittels der Gewindeschraube nicht erreicht werden. Bei diesem Verbinder besteht die Basisplatte aus einem U-förmigen Gehäuse, das einen Lagerstift für eine Schwenkbewegung der Kupplungsplatte trägt. Dieser Verbinder ist eine einfache Spreizklemme, wo sich das Hakenende einerseits und Nasen am Basisgehäuse andererseits an gegenüberliegenden Laibungsstellen der Nut des anderen Profils abstützen. Die beiden Profilstangen werden im Kupplungsfall nicht gegeneinander gedrückt, weil eine Längsbewegung der Kupplungsplatte fehlt.

Es gibt zwar Verbinder, die sowohl eine Längsbewegung als auch eine Querbewegung einer einzelnen Druckplatte gegenüber einer Basisplatte erlauben (DE 73 41 203 U), doch ist dafür anstelle eines querbeweglichen Druckglieds ein Exzenterantrieb erforderlich. Der Exzenter ist mit seinem einen Achsende im Basisteil und mit seinem anderen Achsende in einer Querbohrung der Profilstange drehgelagert und durchsetzt einen Durchbruch in der Kupplungsplatte. Die Lage des Exzenters im Hohlprofilinneren wird durch eine Haltefeder gesichert, die mühsam, im Profilinneren montiert werden muß. Zwischen der Basis- und der Kupplungsplatte sind in zwei zueinander längsversetzten Abschnitten zwei parallele Schrägflächen und Gegenschrägflächen vorgesehen. Beim Drehen des Exzenters fahren die Gegenschrägflächen auf die Schrägflächen auf und sorgen für eine Parallelbewegung der Kupplungsplatten sowohl in Quer- als auch in Längsrichtung. Eine Schwenkbewegung findet hier nicht statt. Die Bauteile dieses bekannten Verbinders lassen sich schwer montieren. Zwar läßt sich die Kupplungsplatte bereits durch eine halbe Drehung des Exzenters zwischen ihrer Kupplungsund Entkupplungsposition überführen, doch ist die Sicherheit der Kupplung gefährdet. Der in seiner Spannposition befindliche Exzenter ist an einer Rückdrehung nicht gehindert. Dadurch ist die Sicherheit der Verbindung der beiden Profilstangen gefährdet.

Der Erfindung liegt die Aufgabe zugrunde, einen zuverlässigen Verbinder mit gegenüber einer Basisplatte sowohl längs- als auch querbeweglichen Kupplungsplatte der eingangs genannten Art (DE 16 50 975 A) zu entwickeln, der im Kupplungsfall für eine zuverlässige feste Verbindung der beiden Profilstangen sorgt, einfacher herstellbar und raumsparender ist und sich dennoch durch ein einfaches querbewegliches Druckglied, wie einer Schraube, betätigen läßt. Dies wird erfindungsgemäß durch die im Kennzeichen des Anspruches 1 angeführten Maßnahmen erreicht, denen folgende besondere Bedeutung zukommt.

Durch die Ausbildung der beiden Steuerprofilpaare wird mittels eines zwischen den beiden Platten wirkenden Druckglieds eine doppelte Wirkung erzielt. Die erste Wirkung ist die an sich bereits aus dem Stand der Technik in diesem Zusammenhang bekannte Längsbewegung der Kupplungsplatte im Sinne einer Anzugsbewegung des Kupplungshakens. Bei der Erfindung erfolgt dies aber in besonderer Weise. Das Druckglied preßt die beiden Platten unmittelbar zusammen und über die Schrägfläche einerseits und ihre zugehörige Anlagestelle andererseits wird die Platten-Längsbewegung erzeugt. Die andere Wirkung ist eine Schwenkbewegung des Hakenendes, welche bei der Erfindung durch eine längsversetzte, gegensinnig zur Schrägfläche orientierte Neigungsfläche einerseits und eine zugehörige Berührungsstelle andererseits zwischen den beiden Platten erlangt wird. Überraschenderweise sind die Richtungen dieser Längs- und Schwenk- Bewegungen nicht nur senkrecht zueinander, sondern auch gegensinnig zu ihrer Ursache, nämlich der Wirkrichtung des die beiden Platten zusammendrückenden Druckglieds orientiert. Die Mittel dazu sind einfach, nämlich zwei Steuerprofilpaare, die durch geeignete Profilierungen der beiden zusammenwirkenden Platten erzeugt werden. Als Druckglied genügt eine einfache Schraube. In jeder Phase ihrer Bewegung, also sowohl in der Freigabelage als auch der vollen Eingriffslage des Hakenendes, nehmen die beiden Platten über die Steuerprofilpaare eine definierte Lage zueinander ein. Damit ist die Position des Hakenendes stets festgelegt und im Kupplungszustand eine steife, stabile Verbindung zwischen den beiden Profilstangen erzielt.

Weitere Maßnahmen und Vorteile der Erfindung ergeben sich aus den Unteransprüchen, der nachfolgenden Beschreibung und den Zeichnungen. In den Zeichnungen ist die Erfindung in zwei Ausführungsbeispielen dargestellt.
Es zeigen:
- Fig. 1: schematisch das besondere Wirkprinzip des zum Aufbau des erfindungsgemäßen Gestells verwendeten Verbinders,
- Fig. 2: in einem Längsschnitt längs der aus Fig. 3 ersichtlichen versprungenen Schnittlinie II-II den in der einen Profilstange des Gestells montierten Verbinder nach der Erfindung im Entkupplungszustand gegenüber der anderen Profilstange des Gestells,
- Fig. 3,: im Längsschnitt durch die Profilstange entlang der Schnittlinie III-III, eine Seitenansicht des Verbinders von Fig. 2,
- Fig. 4: eine Vorderansicht auf den Verbinder in Blickrichtung IV von Fig. 2,
- Fig. 5: einen Querschnitt durch die in Fig. 2 gezeigte Profilstange längs der dortigen Schnittlinie V-V,
- Fig. 6: in einer der Fig. 2 entsprechenden Darstellung den Kupplungszustand der beiden Profile durch den zwischen ihnen in Eingriffslage befindlichen Verbinder,
- Fig. 7: eine ebene Abwinkelung eines Stahlbandes, woraus durch Biegen und ggf. Falten der erfindungsgemäße Verbinder von Fig. 2 bis 10 herstellbar ist,
- Fig. 8: das durch Biegen und Falten des Bandabschnitts von Fig. 7 erlangte Vorprodukt für den erfindungsgemäßen Verbinder im Längsschnitt längs der versprungenen Schnittlinie VIII-VIII von Fig. 9,
- Fig. 9: eine Seitenansicht des in Fig. 8 gezeigten Vorprodukts,
- Fig. 10: in starker Vergrößerung das Hakenende des Verbinders in den drei aus Fig. 2, 6 und 8 ersichtlichen Positionen, und
- Fig. 11,: in einem Bruchstück, ein Teilstück der einen Profilstange des erfindungsgemäßen Gestells mit einer alternativen Ausbildung des Verbinders.

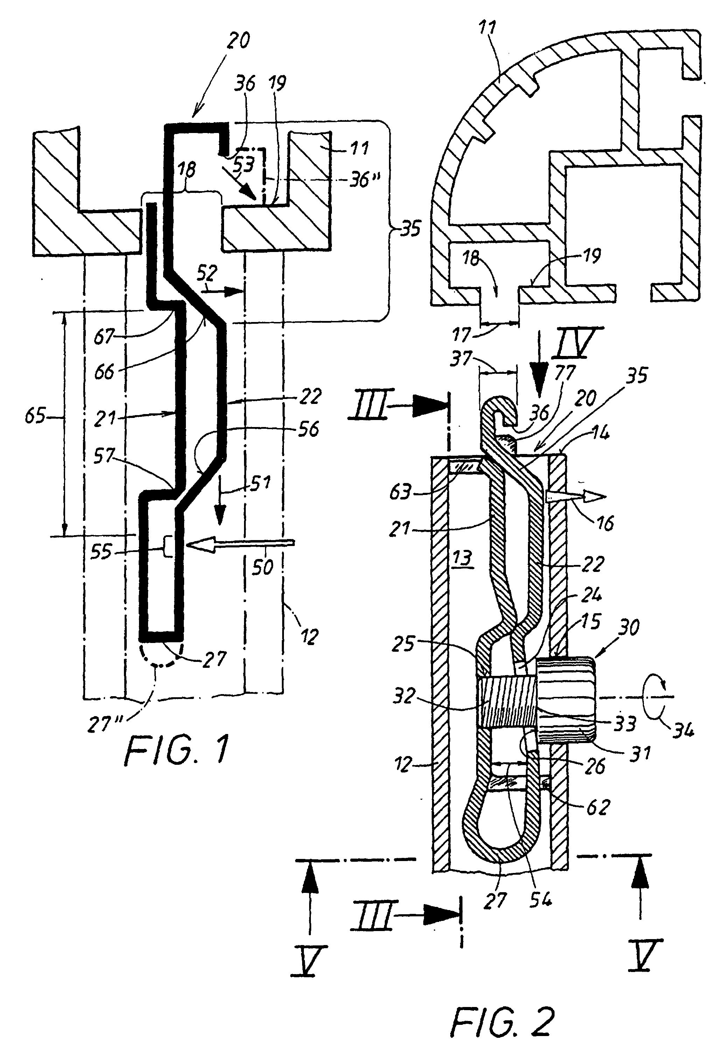

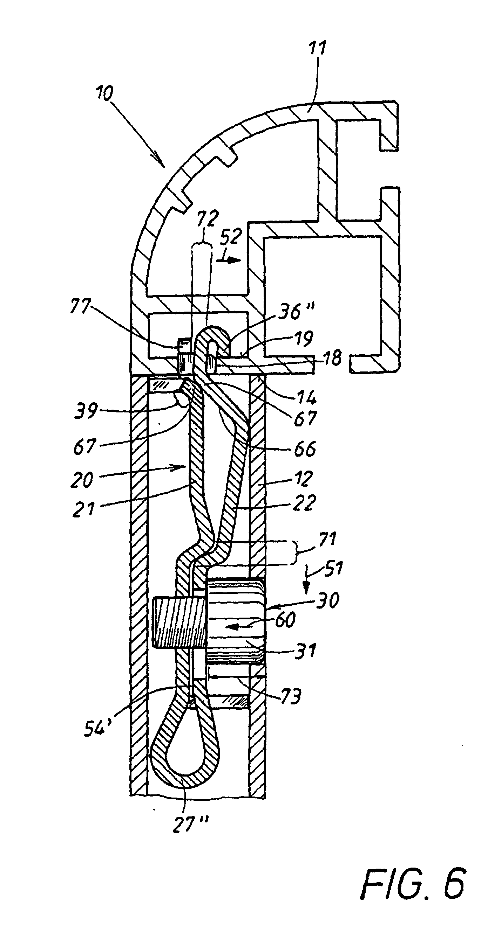

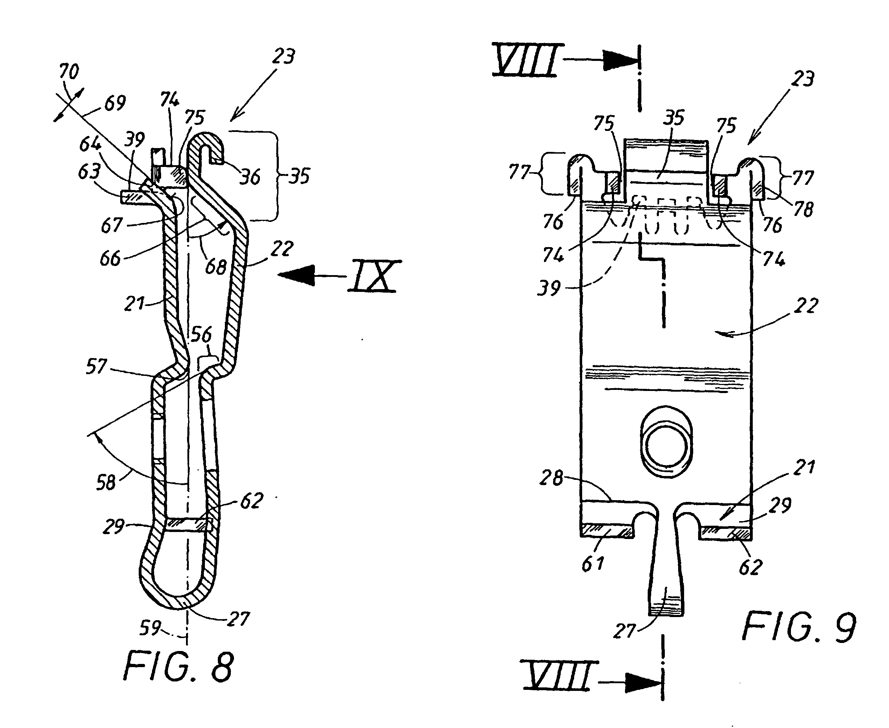

In Fig. 6 ist ein Bruchstück eines Gestells 10 gezeigt, wo zwei Profilstangen 11, 12 mittels eines besonderen Verbinders 20 zusammengehalten werden. Fig. 6 zeigt den Kupplungszustand des Verbinders 20, während in Fig. 2 der Entkupplungszustand dargestellt ist, wo die beiden Profilstangen 11, 12 voneinander gelöst sind. Wie am besten aus Fig. 8 hervorgeht, umfaßt der Verbinder zwei in sich profilierte Platten 21, 22, die im vorliegenden Fall einstückig ausgebildet sind und eine zweischenkelige Baueinheit 23 bilden. Der Verbinder 20 umfaßt, außer dieser Baueinheit 23, nur noch ein Druckglied 30, das im ersten Ausführungsbeispiel gemäß Fig. 2 bis 9 aus einer einfachen Schraube besteht.

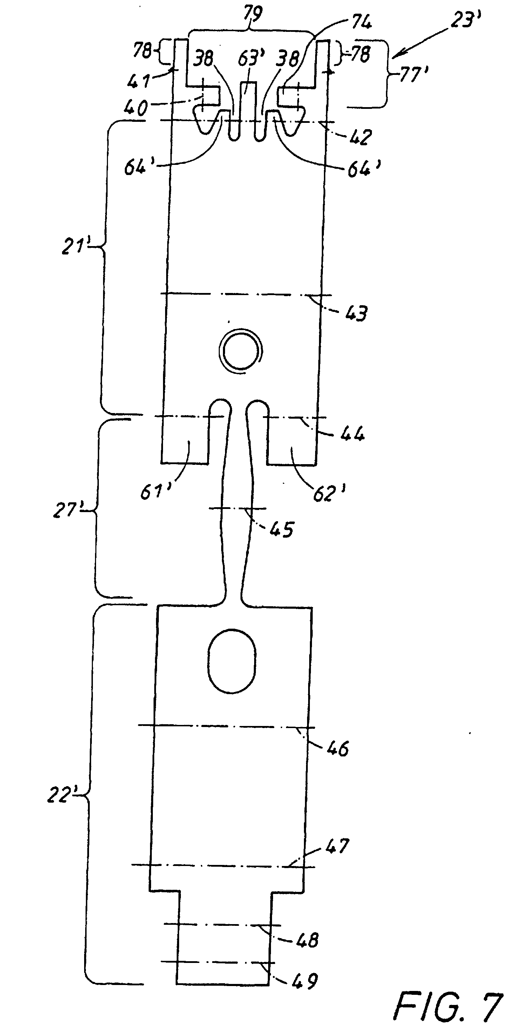

Die Baueinheit 23 wird aus einem im ebenen Zustand in Fig. 7 gezeigten Blechzuschnitt 23' erzeugt, der aus Federstahl besteht. Die dort mit 21', 22' gekennzeichneten Bandabschnitte erzeugen an den strichpunkitiert in Fig. 7 angedeuteten Knick- und/oder Biege- und/oder Faltlinien 40 bis 49 die aus Fig. 8 ersichtliche Form der Baueinheit 23. Zwischen den beiden Bandabschnitten 21', 22' von Fig. 7 verläuft ein schmaler Zwischenabschnitt 27', der nach einer Biegung an der Linie 45 eine bügelförmige Feder 27 an den inneren Plattenenden 28, 29 gemäß Fig. 9 erzeugt. Die Feder 27 sorgt nicht nur für eine unverlierbare Verbindung zwischen den beiden Platten 21, 22 der Baueinheit, sondern erzeugt auch eine zwischen den beiden Platten 21 im Aufspreizsinne wirkende Kraft, wenn man die beiden Platten 21, 22 aus der in Fig. 8 gespreizten Spreizlage in eine aus Fig. 2 ersichtliche Berührungslage überführt. Die hier erzeugte Federkraft 16 ist in Fig. 2 durch einen Pfeil markiert und ergibt sich, wenn man die Baueinheit 23 von Fig. 8 in der Profilstange 12 gemäß Fig. 2 montiert.

Diese Baueinheit 23 wird in einen vom Stirnende 14 der Profilstange 12 aus zugänglichen Hohlraum 13 eingesteckt und in seiner Einstecklage durch die Schraube 30 fixiert. Die Schraube 30 umfaßt einen Schraubenkopf 31 mit zylinderischer Mantelfläche, die in einer hohlzylindrischen Querbohrung 15 geführt ist. Dazu besitzt die eine Platte 22 einen Durchbruch 24, welchen der Gewindeschaft 32 der Schraube 30 frei durchragt. Der Schraubenkopf 31 wirkt dabei wie ein Bund zum Schaft 32, der sich mit seiner Bundinnenseite 33 an der Außenseite 26 dieser Platte 22 abstützt. Die andere Platte 21 besitzt eine Gewindebohrung 25 für den Gewindeschaft 32, wodurch die Schraube 30 bei ihrer durch den Drehpfeil 34 in Fig. 2 veranschaulichten Drehbetätigung einschraubbar ist. Beim Einschrauben der Schraube 30 werden die beiden Platten 21, 22 zusammengedrückt, was im Schema von Fig. 1 durch einen Druckbetätigungs-Pfeil 50 veranschaulicht ist.

Die beiden Platten 21, 22 erfüllen unterschiedliche Funktionen, was durch geeignete Biegungen, Faltungen im Blechzuschnitt 23' erreicht wird. Das läßt sich anhand der in Fig. 8 gezeigten Baueinheit 23 und dem in Fig. 1 verdeutlichten Bauprinzip des Verbinders 20 gut erläutern. Durch Knickungen an den Linien 47, 48 von Fig. 7 und einer Biegung im Bereich der Linie 49 entsteht an der einen Platte 22 ein Hakenende 35, das einen Kupplungshaken 36 am äußeren Plattenende erzeugt. Im Montagefall, gemäß Fig. 2, ragt dieser Kupplungshaken 36 aus dem Stirnende 14 der Profilstange 12 heraus. Der Kupplungshaken 36 besitzt dabei eine Bauhöhe 37, die kleiner/gleich der lichten Weite 17 einer in der zu verbindenden anderen Profilstange 11 vorgesehenen Nut 18 ist. Diese Nut 18 der anderen Profilstange 11 ist hinterschnitten und besitzt ins Nuteninnere weisende Nutwände 19. Wegen seiner Kupplungsfunktion am Hakenende 35 soll diese Platte 22 nachfolgend "Kupplungsplatte" genannt werden, wie schon eingangs hervorgehoben wurde.

Die andere Platte 21 wird ortsfest im Hohlraum 13 der Profilstange 12 fixiert. Daher kann diese Platte 21 "Basisplatte" genannt werden, wie schon eingangs erwähnt wurde. Dies geschieht durch den Kopf 31 der Schraube 30, die im Montagefall in der Querbohrung 15 drehgelagert ist und durch Gewindeeingriff in der Gewindebohrung 25 die Platte 21 fixiert. Außerdem besitzt diese Platte 21 Stützen 61 bis 63, von denen, ausweislich der Fig. 8 und 9, drei Stück vorgesehen sind, die für eine stabile Dreipunktanlage dieser Platte 21 an den Innenflächen vom Hohlraum 13 der Profilstange 12 dienen. Diese Stützen 61 bis 63 befinden sich am inneren Ende 29 und am äußeren Ende 39 dieser Basisplatte 21. Sie sind jeweils durch Abwinkelung von den mit 61', 62' und 63' in Fig. 7 verdeutlichten Plattenteilen des Blechzuschnitts 23' erzeugt. Man nutzt dazu die beidendigen Biegelinien 42 und Knicklinien 44 im Bandabschnitt 21' von Fig. 7. Dadurch entsteht eine äußere Stütze 63 im mittleren Bereich der Basisplatte 21 und zwei innere Stützen 61, 62 beidseitig der bügelförmigen Feder 27. Gegenüber dieser ortsfest positionierten Basisplatte 21 ist die Kupplungsplatte 22 sowohl als ganzes als auch im Bereich ihres Hakenendes 35 in zweifacher Weise bewegbar, was anhand der schematischen Darstellung des Verbinders 20 von Fig. 1 am besten zu erläutern ist.

Auslöser für die beiden, durch Pfeile 51, 52 in Fig. 1 verdeutlichte Bewegungen der Kupplungsplatte 22 ist die gleiche Ursache, nämlich die bereits erwähnte Druckbetätigung 50 der beiden Platten 21, 22. Dies erfolgt an einem definierten Angriffspunkt 55, wo die beiden Platten gegen die zwischen ihnen wirkende Federkraft 16 zusammengedrückt werden. Der große Plattenabstand 54 im Entkupplungszustand gemäß Fig. 2 wird auf einen aus Fig. 6 ersichtlichen kleinen Plattenabstand 54' im Kupplungszustand des Verbinders 20 reduziert. In der Nähe dieser Druckbetätigung 50 von Fig. 1 befindet sich zwischen den beiden Platten 21, 22 ein erstes Paar von Steuerprofilen 56, 57, die einerseits aus einer Schrägfläche 56 und andererseits aus einer damit zusammenwirkenden Anlagestelle 57 bestehen. Beim Zusammendrücken 50 muß die Schrägfläche 56 an der Anlagestelle 57 entlang gleiten und erzeugt so die in Fig. 1 mit 51 bezeichnete Längsbewegung der Kupplungsplatte 22. Sieht man von der noch zu beschreibenden weiteren Bewegung 52 ab, so ergibt sich bei einer Drehbetätigung 34 der Schraube 30 von Fig. 2 im Plattenannäherungssinne 50, daß der Kupplungshaken 36 gegen das Stirnende 14 der Profilstange 12 gezogen wird.

Wie am besten aus der vorgefertigten Baueinheit 23 in Fig. 8 zu erkennen ist, befindet sich die Schrägfläche 56 an der Kupplungsplatte 22 und ist dort durch eine geeignete Verkröpfung des in Fig. 7 gezeigten Abschnitts 22' im Bereich der Linie 46 erzeugt. In der Seitenansicht von Fig. 8 wird die Schrägfläche 56 durch eine Z-förmige Abwinkelung im Plattenverlauf der Kupplungsplatte 22 erzeugt. Bezogen auf eine in Längsrichtung der Profilstange 12 orientierte, in Fig. 8 strichpunktiert angedeutete Mittenebene 59 verläuft die Schrägfläche 56 unter einem negativen Winkel 58, der durch eine Biegung der Platte im Uhrzeigersinne entsteht. Die Anlagestelle 57 wird im vorliegenden Fall durch eine analoge Verkröpfung der Basisplatte 21 erzeugt, so daß man hier auch von einem Auflauf zweier Schrägflächen sprechen könnte. Es genügt dafür aber bereits eine Punktberührung, wie sie durch die Anlagestelle 57 in Fig. 1 veranschaulicht ist. Vergleicht man den Entkupplungszustand von Fig. 2 mit dem Kupplungszustand von Fig. 6 der beiden Profilstangen 11, 12, so erkennt man eine Längsbewegung der Kupplungsplatte 22 um die aus Fig. 6 verdeutliche Strecke 71. Dabei kommt es zu einer Verformung 27" der bügelförmigen Feder. Die Überschußlänge 71 wird in eine Abrollbewegung der Feder umgesetzt. Um dies nicht zu behindern, ist der Durchbruch 24 in der Kupplungsplatte 22 ausreichend groß bemessen. Die bügelförmige Feder erhält im Kupplungszustand des Verbinders 20 die aus Fig. 6 erkennbare Form 27". Dies ist im Schema von Fig. 1 durch eine Strichpunktlinie 27" veranschaulicht.

Zwischen den beiden Platten 21, 22 gibt es aber noch ein weiteres Steuerprofilpaar 66, 67, das, wie das Schema von Fig. 1 zeigt, aus einer Neigungsfläche 66 einerseits und einer Berührungsstelle 67 andererseits besteht. Dieses Steuerprofilpaar 66, 67 ist in einem aus Fig. 1 erkennbaren Längsabstand 65 vom Angriffspunkt 55 der Druckbetätigung 50 entfernt und erlaubt daher die Ausnutzung der Biegeelastizität des Plattenmaterials, das aus Federstahl besteht. Wie anhand der Baueinheit 23 in Fig. 8 veranschaulicht ist, befindet sich die Neigungsfläche 66 an der Kupplungsplatte 22 und entsteht dort durch die bereits vorbeschriebenen Knickungen des in Fig. 7 gezeigten Blechzuschnitts 23' an den Knicklinien 47, 48. Diese Neigungsfläche 66 sitzt also im Ansatzbereich des Hakenendes 35. Die zugehörige Berührungsstelle 67 dagegen ist im Bereich der Biegelinie 42 im Bandabschnitt 21' des Zuschnitts 23' von Fig. 7 vollzogen. Bei der Druckbetätigung 50 kommt es durch Zusammenwirken dieses Steuerprofilpaares 66, 67 zu einer Schwenkbewegung 52 des Hakenendes 35. Der Kupplungshaken 36 wird hinter die Nutwand 19 der zu verbindenden Profilstange 11 vom Gestell 10 gezogen und gelangt aus der in Fig. 1 ausgezogen gezeichneten Freigabelage in die strichpunktiert verdeutlichte Eingriffslage 36".

Dieser Schwenkbewegung 52 überlagert sich die vorbeschriebene Längsbewegung 51 der ganzen Kupplungsplatte 22, wodurch sich für den Kupplungshaken 36 die in Fig. 1 durch den Pfeil 53 veranschaulichte Kombinationsbewegung ergibt. In der vollen Eingriffslage 36" des Kupplungshakens, die auch in Fig. 6 gezeigt ist, preßt der verschwenkte Haken 36" die Nutwand 19 der einen Profilstange 11 gegen das Stirnende 14 der anderen Profilstange 12. Die Nutwand 19 wird also zwischen dem in Eingriffslage 36" befindlichen Kupplungshaken und der Profilstange 12 wie von zwei Klemmbacken eines Schraubstocks zusammengedrückt. Es ergibt sich die Schwenkstrecke 72 von Fig. 6. Durch die andauernde Abstützung des zusammenwirkenden Steuerprofilpaares 66, 67 ist die Eingriffslage 36" des Kupplungshakens gesichert. Außerdem stehen die beiden Platten 21, 22 durch die sie zusammendrückende Schraube 30 unter einer im Spreizsinne zwischen ihnen wirkenden Federkraft, die für die Eingriffssicherheit sorgt.

Die Neigungsfläche 66 ist, ausweislich der Fig. 8, gegensinnig zur vorbeschriebenen Neigungsfläche 56 geneigt. Der die Neigungsfläche 66 bestimmende Plattenabschnitt hat, in der Seitenansicht von Fig. 8 gesehen, einen S-Verlauf; bezüglich der bereits erwähnten Mittelebene 59 schließt die Neigungsfläche 66 einen gegen den Uhrzeigersinn weisenden, positiven Winkel 68 auf. Daraus ergibt sich die vorerwähnte, aus Fig. 1 ersichtliche Richtung der Schwenkbewegung 52 vom Hakenende 35. Diese Wirkrichtung 52 ist der Richtung ihrer Ursache 50, nämlich der Druckbetätigung durch die Schraube entgegen gerichtet. Die Aktion 50 ist also gegensinnig zu der Reaktion 52 des Ausschwenkens. Außerdem ist die Druckbetätigungsrichtung 50 zwischen den beiden Platten 21, 22 senkrecht zur Zugbewegung 51 der Kupplungsplatte 22. Durch die Aktion 50 werden also zwei zueinander senkrechte Reaktionen 51, 52 erzeugt, nämlich ein Schwenken 51 im Spreizsinne und ein Längsbewegen 51 im Zugsinne.

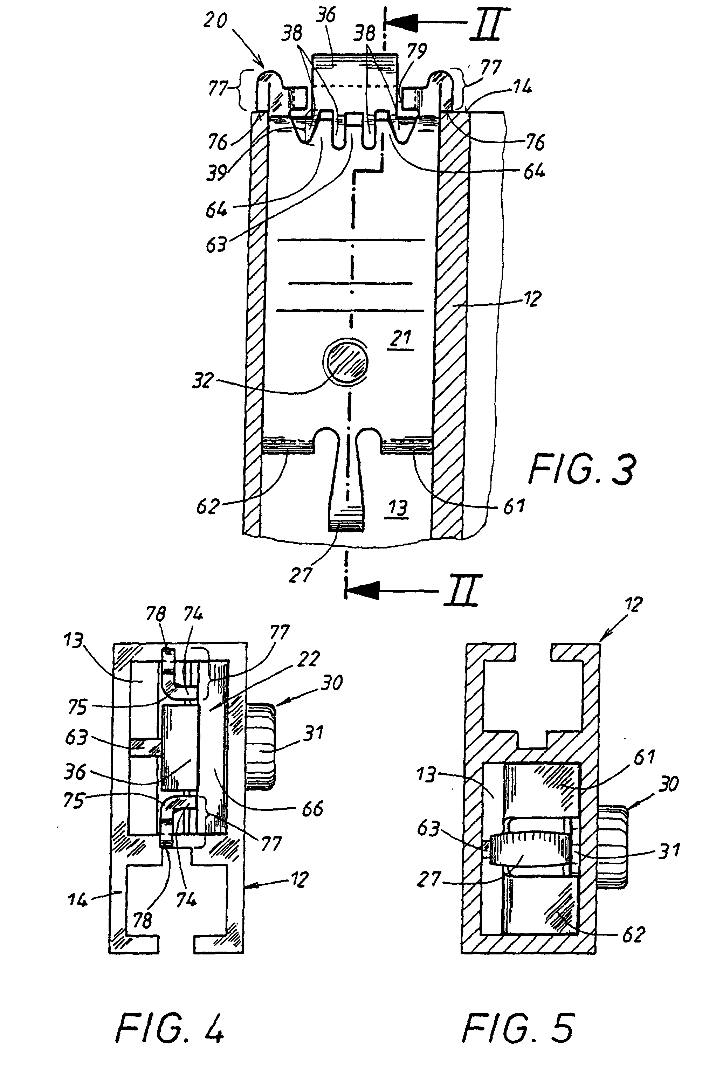

Der Verbinder 20 erlaubt eine genaue Justierung des gewünschten, aus Fig. 6 ersichtlichen Schwenkwinkels 72 seiner Spreizbewegung 52. Dazu ist im vorliegenden Fall die Lage der Berührungssstelle 67 gegenüber der Neigungsfläche 66 veränderbar. Das ist einfacher, als wenn man den im Zusammenhang mit Fig. 8 vorbeschriebenen Neigungswinkel 68 verändern würde, was an sich auch möglich ist. Im vorliegenden Fall ist das aus Fig. 8 ersichtliche Außenende 39 gekrümmt und der in Fig. 8 verdeutlichte Krümmungsbogen 69 veränderbar. Dies wird, wie am besten aus Fig. 3 zu ersehen ist, dadurch erreicht, daß man dieses Krümmungsende 39 der Basisplatte 21 mit Längsschlitzen 38 versieht, wodurch mehrere Finger 63, 64 entstehen. Diese Einschnitte sind im Bandabschnitt 21 vom Blechzuschnitt 23' der Fig. 7 vorgesehen, was dort zunächst zu längs verlaufenden Plattenteilen 63' bzw. 64' unterschiedlicher Länge führt. Der lange, mittlere Plattenteil 63' erzeugt nach der vollzogenen Biegung an der aus Fig. 7 ersichtlichen Linie 42 die bereits erwähnte äußere Stütze 63 . An der Biegelinie 42 werden aus den kurzen Längsplattenteilen 64' durch eine eigene Biegung gekrümmt verlaufende Finger 64, deren Krümmung sie gegenüber der Biegung der Stütze 63 in eine nähere Position zur Neigungsfläche 66 bringt. Die Berührungsstellen 67 wird nur von den beidseitig der abgewinkelten Stütze 63 liegenden gekrümmten Fingern 64 gebildet. In der Baueinheit 23 von Fig. 8 ist das konkrete Ausmaß der Krümmung durch die bereits erwähnte Krümmungslinie 69 verdeutlicht. Wie durch den zugehörigen Doppelpfeil 70 an dieser Krümmungslinie 69 veranschaulicht, läßt sich die Lage der Berührungsstelle 67 durch stärkeres Hinkrümmen oder Wegbiegen der Finger 64 verändern. Die Krümmungsrichtung der Finger 64 an der Basisplatte 21 ist vom Hakenende 36 der Kupplungsplatte 22 weggerichtet.

Bei der Drehbetätigung 34 der Schraube 30 wird der Schraubenkopf 31 in der hohlzylindrischen Querbohrung 15 der Profilstange 12 axialbewegt, wie ein Vergleich zwischen der Herausschraubposition der Schraube 30 im Entkupplungszustand von Fig. 2 mit der Einschraubposition der Schraube 30 im Kupplungszustand von Fig. 6 zeigt. Diese Axialbewegung ist in Fig. 6 durch einen Pfeil 60 veranschaulicht. Damit hat der Schraubenkopf 31, wie aus Fig. 6 hervorgeht, eine Kopfhöhe 73, die größer als die Abstandsdifferenz zwischen dem Plattenabstand 54 im Entkupplungszustand von Fig. 2 und dem Minimalabstand 54 im Kupplungszustand von Fig. 6 ist. im Kupplungszustand von Fig. 6 sollte der Schraubenkopf 31 möglichst bündig mit der Außenfläche der Profilstange 12 sein. Im Entkupplungszustand von Fig. 2 muß aber der Schraubenkopf 31 auch schon mit seinem inneren Endstück in die Querbohrung 15 eingreifen und dadurch die bereits oben erwähnte Position des montierten Verbinders 20 in der Profilstange 12 sichern.

Wie aus Fig. 3 zu entnehmen ist, besitzt die Basisplatte 21 zwei äußere Plattenverlängerungen 77, die im Montagefall aus der Stirnfläche 14 der Profilstange 12 herausragen und seitlich, neben dem Kupplungshaken 36 der Kupplungsplatte 20 zu liegen kommen. Diese Plattenverlängerungen 77 ragen, wie der Kupplungszustand von Fig. 6 zeigt, im Verbindungsfall in die Nut 18 der anderen Profilstange 11 hinein und stützen sich an der bezüglich der vorbeschriebenen Spreizbewegung 52 gegenüberliegenden Laibungsseite der Nut 18 ab. Dadurch wird eine Verdrehung der beiden miteinander verbundenen Profilstangen 11, 12 verhindert. Im entspannten Zustand, d. h., wenn der Kupplungshaken sich in seiner Entkupplungslage 36 gemäß Fig. 2 und 4 befindet, befindet sich der Kupplungshaken in vertikaler Ausrichtung mit den beiden Plattenverlängerungen 77. Die Plattenverlängerungen 77 sind zusammen mit dem Kupplungshaken 36 ausgerichtet und sollten eine aus Fig. 2 ersichtliche übereinstimmende Baubreite 37 aufweisen. Dies ist möglich, weil die beiden Plattenverlängerungen 77, wie Fig. 3 zeigt, zwischen sich einen Gabelraum einschließen, in welchem das Hakenende mit seinem Kupplungshaken 36 hinein paßt. Ein solcher Gabelraum 79 ist auch aus dem ebenen Blechzuschnitt 23' von Fig. 7 erkennbar, der zwischen zwei Bandrandverlängerungen 77' zustande kommt, welche ein besonderes, noch näher zu beschreibendes Umrißprofll aus Ansatzteilen 75' und Endabschnitten 78 aufweisen.

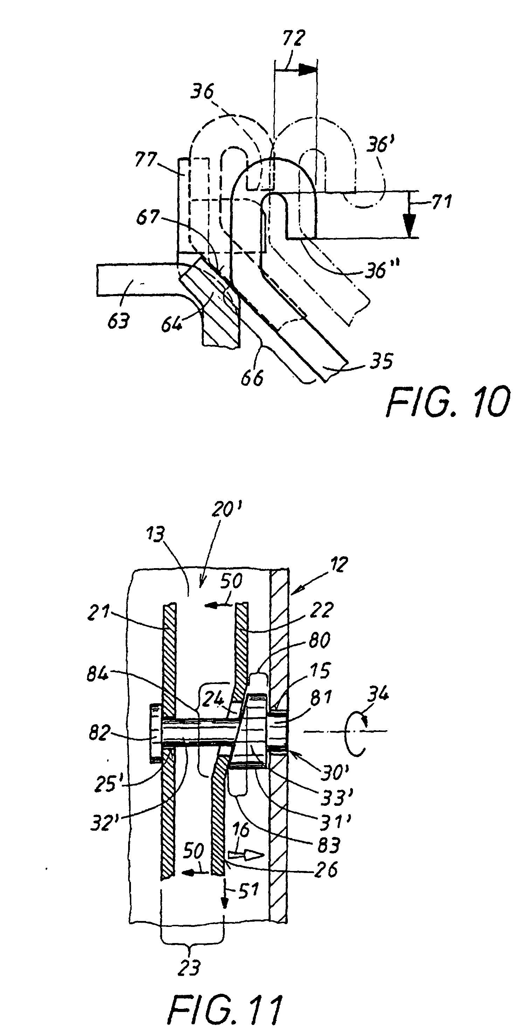

Die Bandrandverlängerungen 77' von Fig. 7 besitzen zunächst zwei gegeneinander weisende ebene Lappen 74, die entlang der dortigen Knicklinien 40 gegen die Kupplungsplatte 22 der Baueinheit 23 abgewinkelt werden, wodurch dort seitliche Ansätze 75 neben den Kupplungshaken 36 entstehen. Dies ist aus Fig. 4 besonders gut ersichtlich. Die Ansätze 75 verhindern eine seitliche Ausweichbewegung des Hakenendes in Nutverlaufsrichtung. Dadurch ergibt sich eine auch aus Fig. 10 ersichtliche Führung für das Hakenende 36, wenn man den Kupplungshaken über die Zugstrecke 71 und Schwenkstrecke 72 zwischen der Freigabelage 36 im Entkupplungszustand und der Eingriffslage 36" im Kupplungszustand überführt. In Fig. 10 ist auch strichpunktiert die Ausgangslage 36' des Kupplungshakens im Ausbauzustand der Baueinheit 23 gemäß Fig. 8 eingezeichnet.

Die Plattenverlängerung 77 besitzt, wie aus Fig. 9 hervorgeht, eine die Basisplatte 21 beidlängsseits seitlich überragende Nasen 76, die - im Montagefall des Verbinders in der Profilstange 12 gemäß Fig. 3 - sich am Stirnende 14 abstützen und dadurch die Einbautiefe des Verbinders 20 im Hohlraum 13 festlegen. In diesem Fall ist die Gewindebohrung 25 mit der seitlichen Querbohrung 15 in der Wand der Profilstange 12 ausgerichtet und erlaubt ein zügiges Einstecken und Einschrauben der Schraube 30. Die Nasen 76 kommen durch eine U-förmige Rückfaltung von Endabschnitten 78 der in Fig. 7 gezeigten Bandrandverlängerungen 77' des Blechzuschnitts 23' zustande. In Fig. 7 ist die Lage der dafür maßgeblichen Faltlinien 41 dieser Rückfaltung angedeutet.

In der in Fig. 11 gezeigten Alternative wird ein abgewandelt ausgebildeter Verbinder 20' verwendet. Zur Bezeichnung analoger Bauteile werden die gleichen Bezugszeichen wie im vorausgehenden Ausführungsbeispiel von Fig. 2 bis 10 verwendet, weshalb insoweit die bisherige Beschreibung gilt. Auch der Verbinder 20' besitzt zwei im Aufspreizsinne gemäß dem Kraftpfeil 16 in Fig. 11 federbelastete Platten 21, 22, die als Basis- und Kupplungsplatte fungieren. Auch hier wird ein Druckglied 30' verwendet, dessen Schaft 32' allerdings gewindefrei ist und mit seinem Schaftinnenende 82 in der Basisplatte 21 drehbar 34 verankert ist. Das Schaftaußenende 81 des Druckglieds 30' ist, analog zum vorbeschriebenen Schraubenkopf 31, in der Querbohrung 15 der Profilstange 12 fixiert. Es liegen aber folgende Abweichungen dieses Verbinders 20' vor.

Der gewindefreie Schaft 32' durchgreift ein Loch 25' der Basisplatte 21' und ist dort drehbar 34, aber axialfest verankert. Dazu dient ein Endflansch 82 am Schaftinnenende. Das Druckglied 30' stützt sich ebenfalls mit einem Bund 31' an der Außenseite 26 der Kupplungsplatte 22 ab, besitzt aber an seiner Bundinnenseite 33' eine Keilfläche 83, die diesen Bund 31 zu einem Drehkeil 80 umfunktioniert. Im Bereich der Keilfläche 83 besitzt die dortige Kuppplungsplatte 22 einen abgewinkelten Abschnitt 84, an dem sich die Keilfläche 83 abstützt. Bei einer Drehbetätigung 34 um 180° kommt der Drehkeil 80 in eine gegensinnige Drehposition, wo die Keilfläche 83 die Kupplungsplatte 22 im Sinne der Pfeile 50 von Fig. 11 gegen die Federkraft 16 zusammendrückt. Weil auch in diesem Fall, was in Fig. 11 nicht näher gezeigt ist, die im vorausgehenden Beispiel beschriebenen beiden Steuerprofilpaare vorliegen, kommt auch hier eine längsgerichtete Zugbewegung 51 der Kupplungsplatte 22 gegenüber der Basisplatte 21 und eine Schwenkbewegung eines nicht näher gezeigten Hakenendes zustande. Diese Längsbewegung 51 ist wegen einer aureichend großen Bemessung des Durchbruchs 24 für den Durchtritt des glatten Schafts 32' vom Druckglied 30' möglich.

Der Verbinder 20' von Fig. 11 zeichnet sich durch eine besonders einfache Montage im Inneren des Hohlraums 13 der Profilstange 12 aus. Der Verbinder 20' kann aus seinen Bestandteilen außerhalb der Profilstange 12 komplett vormontiert werden. Die auch hier zweischenkelige Baueinheit 23 kann bereits vom Hersteller her mit dem Druckglied 30' ausgerüstet und in kompletter Kombination der Bauteile 23, 30' angeliefert werden. Bei Montage des Verbinders 20' werden die beiden Platten 21, 22 zunächst soweit zusammengedrückt, daß der Verbinder 20' mit dem fertig montierten Druckglied 30' durch die Profilöffnung der Stange 12 axial eingeschoben werden kann. Die Einbautiefe im Hohlraum 13 kann auch hier durch die bereits im ersten Ausführungsbeispiel beschriebenen Nasen an der Basisplatte bestimmt sein, die am Stirnende dieser Profilstange 12 anschlagen. Die Montagetiefe ist aber auch dadurch bestimmt, daß der axial eingeführte Verbinder 20 mit seinem Betätigungsende 81 in die Querbohrung 15 schnappt. Gibt man die zusammengedrückten Platten 21, 22 frei, so wird das Betätigungsende 81 des Druckglieds 30' von der Federkraft 16 nach Art eines Druckknopfes in die Querbohrung 15 eingedrückt. Der Verbinder 20 wird in seiner definierten Montagelage in der Profilstange 12 gehalten.

### Bezugszeichenliste:

- 10: Gestell
- 11: erste Profilstange
- 12: zweite Profilstange für 20, 20'
- 13: Hohlraum von 12
- 14: Stirnende von 12
- 15: Querbohrung von 12
- 16: Federkraft von 22 gegenüber 21
- 17: lichte Nutweite von 18
- 18: Nut in 11
- 19: Nutwand bei 18
- 20: Verbinder mit Schraube
- 20': Verbinder mit Drehkeil (Fig. 11)
- 21: Basisplatte von 20
- 21': erster Bandabschnitt von 23' für 21
- 22: Kupplungsplatte von 20
- 22': zweiter Bandabschnitt von 23' für 22
- 23: Baueinheit aus 21, 22, 27
- 23': Blechzuschnitt für 23
- 24: Durchbruch in 22 für 32 bzw. 32'
- 25: Gewindebohrung in 21 von 20
- 25': Loch in 21 für 20' (Fig. 11)
- 26: Außenseite von 22
- 27: bügeiförmige Feder zwischen 21, 22
- 27': Zwischenabschnitt von 23' (Fig. 7)
- 27": Verformung von 27 im Kupplungszustand (Fig. 6)
- 28: inneres Plattenende von 22
- 29: inneres Plattenende von 21
- 30: Druckglied, Schraube
- 30': Druckglied, Hubexzenter (Fig. 11)
- 31: Schraubenkopf, Bund
- 31': Bund von 30' (Fig. 11)
- 32: Gewindeschaft von 30
- 32': glatter Schaft von 30' (Fig. 11)
- 33: Bundinnenfläche von 31
- 33': Bundinnenfläche von 31' (Fig. 11)
- 34: Drehbetätigungs-Pfeil von 30 bzw. 30'
- 35: Hakenende von 22
- 36: Kupplungshaken an 35 (Freigabelage)
- 36': Ausgangslage von 36 (Fig. 10)
- 36": Eingriffslage von 36 (Fig. 6)
- 37: Baubreite von 36 (Fig. 2)
- 38: Längsschlitz bei 39 (Fig. 3)
- 39: äußeres Plattenende von 21, gekrümmtes Außenende
- 40: Knicklinie für 74 (Fig. 7)
- 41: Knicklinie für 78 (Fig. 7)
- 42: Biegelinie für 63 (Fig. 7)
- 43: Biegelinie für 57 (Fig. 7)
- 44: Knicklinie für 81, 62 (Fig. 7)
- 45: Biegelinie für 27 (Fig. 7)
- 46: Verkröpfungslinien für 56 von 22 (Fig. 7)
- 47: Knicklinie für 35 an 22 (Fig. 7)
- 48: Knicklinie für 66 an 22 (Fig. 7)
- 49: Biegelinie für 36 (Fig. 7)
- 50: Druckbetätigungspfeil (Fig. 1, 11)
- 51: Längsbewegung von 22 im Zugsinne
- 52: Schwenkbewegung von 35 im Spreizsinne
- 53: Kombinationsbewegungs-Pfeil aus 51, 52 (Fig. 1)
- 54: großer Plattenabstand im Entkupplungszustand (Fig. 2)
- 54': kleiner Plattenabstand im Kupplungszustand (Fig. 6)
- 55: Angriffspunkt für 50 (Fig. 1)
- 56: erstes Steuerprofilpaar, Schrägfläche
- 57: erstes Steuerprofilpaar, Anlagestelle für 56
- 58: negativer Z-Winkel für 56 (Fig. 8)
- 59: Mittenebene von 23 (Fig. 8)
- 60: Axialbewegung von 31 beim Drehen 34 (Fig. 6)
- 61: innere Stütze an 21
- 61': Plattenteil von 23' für 61 (Fig. 7)
- 62: weitere innere Stütze an 21
- 62': Plattenteil für 62 (Fig. 7)
- 63: äußere Stütze an 21, abgewinkelter Finger
- 63': längsverlaufender Plattenteil für 63 (Fig. 7)
- 64: gekrümmter Finger für 67
- 64': Längsplattenteil an 23' für 64 (Fig. 7)
- 65: Längsabstand zwischen 55 und 66, 67 (Fig. 1)
- 66: zweites Steuerprofilpaar, Neigungsfläche
- 67: zweites Steuerprofilpaar, Berührungsstelle für 66
- 68: positiver S-Winkel für 66 (Fig. 8)
- 69: Krümmungslinie von 64 für 67 (Fig. 8)
- 70: Lageveränderung von 67 (Fig. 8)
- 71: Zugstrecke von 22 durch 51 (Fig. 6, 10)
- 72: Schwenkwinkel von 35, Schwenkstrecke durch 52 (Fig. 6, 10)
- 73: Kopfhöhe von 31 (Fig. 6)
- 74: Lappen für 65 (Fig. 4, 9)
- 75: seitlicher Ansatz an 77 (Fig. 4, 9)
- 76: Nase an 78
- 77: Plattenverlängerung an 21
- 77': Bandlängsrandverlängerungen für 77 an 23' (Fig. 7)
- 78: Endabschnitt von 77 (Fig. 7, 9)
- 79: Gabelraum zwischen 77 bzw. 77'
- 80: Drehkeil von 30' (Fig. 11)
- 81: äußeres Schaftende, Betätigungsende von 30' (Fig. 11)
- 82: Schaftinnenende, Endflansch an 32' (Fig. 11)
- 83: Keilfläche an 31'
- 84: abgewineklter Abschnitt von 22, Winkelabschnitt

## Patentansprüche

1. Gestell (10), insbesondere für Möbel, aus lösbar durch einen Verbinder (20, 20') miteinander kuppelbaren Profilstangen (11, 12) von denen wenigstens einige hinterschnittene Nuten (18) und andere einen stirnseitigen Hohlraum (13) zur Aufnahme des Verbinders (20, 20') aufweisen,
und der Verbinder (20, 20') aus mindestens zwei nebeneinanderliegenden profilierten Platten (21, 22) besteht,
die zwar durch eine Federkraft (16) auseinandergedrückt werden, aber durch Drehbetätigung (34) eines bezüglich der Ausrichtung der profilierten Platten (21, 22) querbeweglichen Druckglieds (30, 30'), das an einem definierten Punkt (55) an einer der Platten (21, 22) angreift, abstandsmindernd gegeneinanderbewegbar (50) sind,
wobei die eine Platte, nämlich eine Kupplungsplatte (22), ein Hakenende (35) mit mindestens einem Kupplungshaken (36) besitzt, der bei montiertem Verbinder (20, 20') aus dem Stirnende (14) der Profilstange (12) herausragt und zum Kuppeln in die Nut (18) der anderen Profilstange (11) eingreift und sie hinterfaßt,
während die andere Platte, nämlich eine Basisplatte (21), im Montagefall ortsfest im Hohlraum (13) der Profilstange (12) sitzt,
**dadurch gekennzeichnet ,**
**daß** die beiden Platten (21, 22) zwischen sich zwei in ihrer Längsrichtung mit Abstand zueinander angeordnete, jeweils zusammenwirkende Steuerprofilpaare (56, 57; 66, 67) aufweisen,
die bei der Drehbetätigung (34) des Druckglieds (30, 30') zwei zueinander unterschiedliche Bewegungen (51, 52) der Kupplungsplatte (22) gegenüber der Basisplatte (21) bewirken, nämlich
- eine den Kupplungshaken (36) gegen das Stirnende (14) der Profilstange (12) ziehende Längsbewegung (51) der Kupplungsplatte (22) gegenüber der Basisplatte (21), die bei einer Drehbetätigung (34) des Druckglieds (30, 30') im Plattenannäherungssinne (50) durch das erste Steuerprofilpaar (56, 57) hervorgerufen wird, das aus der nahe am Angriffspunkt (55) des Druckglieds (30, 30') angeordneten Schrägfläche (56) an der einen Platte (22) und der zugehörigen Anlagestelle (57) an der anderen Platte (21) besteht und
- eine den Kupplungshaken (36) entgegen dem Plattenannäherungssinne (50) hinter die Nutwand (19) verschwenkende Querbewegung (52) des Hakenendes (35) der Kupplungsplatte (22) gegenüber der Basisplatte (21), die - im Kupplungsfall der beiden Profilstangen (11, 12) - bei einer Drehbetätigung (34) des Druckglieds (30; 30') im Plattenannäherungssinne (50) durch das zweite Steuerprofilpaar (66, 67) hervorgerufen wird, das aus der entfernt (65) vom Angriffspunkt (55) des Druckglieds (30; 30') angeordneten, zur Schrägfläche (56) gegensinnig geneigten Neigungsfläche (66) an der einen Platte (22) und einer zugehörigen Berührungsstelle (67) an der anderen Platte (21) besteht.

2. Gestell nach Anspruch 1, **dadurch gekennzeichnet, daß** das einen Schaft (32, 32') und einen Bund (31, 31') aufweisende Druckglied (30, 30') mit seinem Schaft (32, 32') zwar in der Basisplatte (21) drehbar verankert ist, aber die Kupplungsplatte (22) frei (24) durchragt,
daß das äußere Schaftende (31, 81) in eine Querbohrung (15) der Profilstange (12) drehgelagert ist und die Lage der Basisplatte (21) im Hohlraum (13) der Profilstange (12) fixiert,
und daß der Bund (31, 31') sich an der Außenseite (26) der Kupplungsstange (22) abstützt.

3. Gestell nach Anspruch 1 oder 2, **dadurch gekennzeichnet, daß** das Druckglied aus einer Schraube (30) mit einem Gewindeschaft (32)
und einem verdickten Schraubenkopf (31) besteht,
der Gewindeschaft (32) in eine Gewindebohrung (25) der Basisplatte (21) eingreift und bei der Drehbetätigung (34) darin verschraubbar ist,
und daß der Schraubenkopf (31) sich an der Außenseite (26) der Kupplungsplatte (22) abstützt.

4. Gestell nach Anspruch 1 oder 2, **dadurch gekennzeichnet, daß** das Druckglied (30') einen gewindefreien Schaft (32') mit einem Bund (31') aufweist,
dessen Schaftinnenende (82) an der Basisplatte (21) drehbar (34), aber axialfest verankert ist,
daß der Bund (31') als Drehkeil (80) ausgebildet ist und an seiner Bundinnenseite (31') eine schraublinienartige Keilfläche (83) aufweist, die sich an einem abgewinkelten Abschnitt (Winkelabschnitt 84) der Kupplungsplatte (22) abstützt,
und daß das Außenende (81) des Schafts (32') durch die zwischen den beiden Platten (21, 22) wirksame Federkraftbelastung (16) bei der Montage des Verbinders (20') druckknopfartig in die Querbohrung (15) der Profilstange (12) einschnappt.

5. Gestell nach Anspruch 1 bis 4, **dadurch gekennzeichnet, daß** die Kupplungsplatte (22) und die Basisplatte (21) miteinander einstückig sind.

6. Gestell nach Anspruch 5, **dadurch gekennzeichnet, daß** zwischen den beiden Platten (21, 22) eine Feder (27) verläuft, welche sie im Aufspreizsinne zueinander federbelastet (16).

7. Gestell nach Anspruch 5 oder 6, **dadurch gekennzeichnet, daß** die beiden Platten (21, 22) aus elastischem Material, wie Federstahl, bestehen und an ihren inneren Plattenenden (28, 29) durch eine bügelförmige Feder (27) miteinander verbunden sind und eine zweischenkelige Baueinheit (23) für den Verbinder (20) bilden.

8. Gestell nach einem oder mehreren der Ansprüche 1 bis 7, **dadurch gekennzeichnet, daß** die Basisplatte (21) quer zur Plattenrichtung verlaufende Stützen (61, 62, 63) aufweist, die sich an der Hohlraum-Innenfläche abstützen.

9. Gestell nach Anspruch 8, **dadurch gekennzeichnet, daß** die Stützen (61, 62, 63) aus abgewinkelten Plattenteilen (61', 62', 63') bestehen, die sich vorzugsweise am äußeren und inneren Plattenende (29, 39) der Basisplatte (21) befinden.

10. Gestell nach Anspruch 8 oder 9, **dadurch gekennzeichnet, daß** drei Stützen (61, 62, 63) eine Dreipunktanlage der Basisplatte (21) an der Hohlraum-Innenfläche erzeugen.

11. Gestell nach Anspruch 10, **dadurch gekennzeichnet, daß** die drei Stützen aus einer äußeren (63) und zwei inneren Stützen (61, 62) bestehen,
von denen die äußere Stütze (63) im mittleren Bereich der Berührungsstelle (67) bzw. der Neigungsfläche (66) angeordnet ist,
während die beiden inneren Stützen (61, 62) beidseitig der endseitigen bügelförmigen Feder (27) angeordnet sind.

12. Gestell nach einem oder mehreren der Ansprüche 1 bis 11, **dadurch gekennzeichnet, daß** der in der Querbohrung (15) der Profilstange (12) drehgelagerte Kopf (31) der Druckschraube (30) eine Kopfhöhe (73) besitzt, die größer/gleich dem maximalen Weg der Anklappbewegung (50) der Kupplungsplatte (22) gegenüber der Basisplatte (21) zwischen der vollen Freigabelage und der vollen Eingriffslage des Hakenendes (35) ist.

13. Gestell nach einem oder mehreren der Ansprüche 1 bis 12, **dadurch gekennzeichnet, daß** die Basisplatte (21) wenigstens eine äußere Plattenverlängerung (77) aufweist, die im Montagefall des Verbinders (20) aus der Stirnfläche (14) der Profilstange (12) herausragt und seitlich neben dem Kupplungshaken (36) der Kupplungsplatte (22) zu liegen kommt,
und daß die Plattenverlängerung (77) im Kupplungsfall in die Nut (18) der anderen Profilstange (11) hineinragt.

14. Gestell nach Anspruch 13, **dadurch gekennzeichnet, daß** das äußere Plattenende (77') der Basisplatte (21) gegabelt ist und die Gabelung (79) zwei zueinander spiegelbildliche Plattenverlängerungen (77') erzeugt,
und daß - im Montagefall des Verbinders (20) - das Hakenende (35) der Kupplungsplatte (22) im Gabelraum (79) angeordnet ist.

15. Gestell nach Anspruch 13 oder 14, **dadurch gekennzeichnet, daß** die Plattenverlängerung (77) der Basisplatte einen seitlichen Ansatz (75) aufweist, welcher eine Ausweichbewegung des Hakenendes (35) in Nutverlaufsrichtung der anderen Profilstange (11) verhindert.

16. Gestell nach Anspruch 15, **dadurch gekennzeichnet, daß** der Ansatz (75) durch einen an der Plattenverlängerung (77) angeformten, abgewinkelten Lappen (74) erzeugt ist.

17. Gestell nach einem oder mehreren der Ansprüche 13 bis 16, **dadurch gekennzeichnet, daß** die Plattenverlängerung (77) eine die Basisplatte (21) seitlich überragende Nase (76) trägt, die - im Montagefall des Verbinders (20) - sich am Stirnende (14) der Profilstange (12) abstützt und die Einbautiefe des Verbinders (20) im Hohlraum (13) bestimmt.

18. Gestell nach Anspruch 17, **dadurch gekennzeichnet, daß** die Nase (76) durch eine U-förmige Rückfaltung eines Endabschnitts (78) der Plattenverlängerung (77) gebildet ist.

19. Gestell nach einem oder mehreren der Ansprüche 1 bis 18, **dadurch gekennzeichnet, daß** der Neigungswinkel (68) der am Hakenende (35) der Kupplungsplatte (22) befindlichen Neigungsfläche (66) und/oder die Lage der zugehörigen, am Außenende (39) der Basisplatte (21) vorgesehenen Berührungsstelle (67) justierbar sind.

20. Gestell nach Anspruch 19, **dadurch gekennzeichnet, daß** die Berührungsstelle (67) von einem gekrümmten Außenende (Krümmungsende 39) der Basisplatte (21) erzeugt ist, dessen Krümmungsbogen (69) zur Einjustierung der Lage der Berührungsstelle (67) veränderbar (70) ist.

21. Gestell nach Anspruch 20, **dadurch gekennzeichnet, daß** das Krümmungsende (39) der Basisplatte (21) längsgeschlitzt (38) ist und mehrere nebeneinanderliegende Finger (63, 64) erzeugt, von denen wenigstens einige (64) die Berührungsstelle (67) bilden.

22. Gestell nach Anspruch 21, **dadurch gekennzeichnet, daß** die Krümmungsrichtung (69) der Finger (64) an der Basisplatte (21) vom Hakenende (35) der Kupplungsplatte (21) weg weist.

23. Gestell nach Anspruch 21 oder 22, **dadurch gekennzeichnet, daß** der eine Finger (63) verlängert ist und zugleich die äußere Stütze der Basisplatte (21) bildet, welche sich - im Montagefall des Verbinders (20) - an der Hohlraum-Innenfläche der Profilstange (12) abstützt.

24. Gestell nach einem oder mehreren der Ansprüche 1 bis 23, **dadurch gekennzeichnet, daß** der Schraubenkopf (31) eine zylindrische Mantelfläche aufweist, die in der hohlzylindrischen Querbohrung (15) der Profilstange (12) geführt und beim Drehen (34) der Druckschraube (30) axialbeweglich ist.

## Claims

1. Frame (10), particularly for furniture, made up of profiled bars (11,12) which can be detachably coupled to one another by a connector (20, 20') and of which at least some have undercut grooves (18) and others have an end-face cavity (13) for receiving the connector (20, 20'),
and the said connector (20, 20') consists of at least two profiled plates (21, 22) which lie side by side
and which, although they are pressed apart from one another by a spring force (16), can nevertheless be moved towards one another (50) in an interval-reducing manner by rotating actuation (34) of a pressure member (30, 30') which is transversely movable with respect to the orientation of the profiled plates (21, 22) and which acts upon a defined point (55) on one of the said plates (21, 22),
wherein one plate, namely a coupling plate (22), possesses a hooked end (35) with at least one coupling hook (36) which, when the connector (20, 20') is fitted, protrudes out of the front end (14) of the profiled bar (12) and engages, for coupling purposes, in the groove (18) in the other profiled bar (11) and grips behind it,
while the other plate, namely a base plate (21), is seated in a stationary manner in the cavity (13) of the profiled bar (12) in the fitting situation,
**characterised in that**
the two plates (21, 22) have, between them, two pairs of control profiles (56, 57; 66, 67) which are disposed in the longitudinal direction of the said plates and at an interval in relation to one another and interact in each case,
and which bring about, when rotating actuation (34) of the pressure member (30, 30') occurs, two movements (51, 52) of the coupling plate (22) in relation to the base plate (21) which differ from one another, namely
- a longitudinal movement (51) of the coupling plate (22) in relation to the base plate (21), which movement pulls the coupling hook (36) towards the front end (14) of the profiled bar (12) and is brought about, when rotating actuation (34) of the pressure member (30, 30') in the direction (50) in which the plates are brought closer together occurs, by the first pair of control profiles (56, 57) which consists of the oblique face (56) on the one plate (22), which face is disposed close to the point of engagement (55) of the pressure member (30, 30'), and of the appertaining point of abutment (57) on the other plate (21), and
- a transverse movement (52) of the hooked end (35) of the coupling plate (22) in relation to the base plate (21), which movement tilts the coupling hook (36) behind the groove wall (19), counter to the direction (50) in which the plates are brought closer together, and - in the situation involving coupling of the two profiled bars (11, 12) - is brought about, when rotating actuation (34) of the pressure member (30; 30') occurs, in the direction (50) in which the plates are brought closer together, by the second pair of control profiles (66, 67) which consists of the inclined face (66) on the one plate (22), which face is disposed in a manner remote (65) from the point of engagement (55) of the pressure member (30; 30') and is inclined in the opposite direction to the oblique face (56), and of an appertaining contact point (67) on the other plate (21).

2. Frame according to claim 1, **characterised in that**, although the pressure member (30, 30'), which has a shaft (32, 32') and a collar (31, 31'), is rotatably anchored by its shaft (32, 32') in the base plate (21), it nevertheless protrudes freely (24) through the coupling plate (22),
that the outer end (31, 81) of the shaft is rotatably mounted in a transverse bore (15) in the profiled bar (12) and fixes the location of the base plate (21) in the cavity (13) of the said profiled bar (12),
and that the collar (31, 31') is supported on the outer side (26) of the coupling plate (22).

3. Frame according to claim 1 or 2, **characterised in that** the pressure member consists of a screw (30) with a thread shaft (32) and a thickened screw head (31),
the threaded shaft (32) engages in a threaded bore (25) in the base plate (21) and can be screwed into the said bore when rotating actuation (34) occurs,
and that the screw head (31) is supported on the outer side (26) of the coupling plate (22).

4. Frame according to claim 1 or 2, **characterised in that** the pressure member (30') has a threadless shaft (32') with a collar (31'),
the inner end (82) of which shaft is anchored on the base plate (21) in a rotatable (34) but axially fixed manner,
that the collar (31') is constructed as a rotating wedge (80) and has, on the inner side (31') of the said collar, a helicoidal-line-like wedge face (83) which is supported on an angled portion (angular portion 84) of the coupling plate (22),
and that, when the connector (20') is fitted, the outer end (81) of the shaft (32') snaps into the transverse bore (15) in the profiled bar (12) after the fashion of a press-stud as a result of the spring-force loading (16) which is operative between the two plates (21, 22).

5. Frame according to claims 1 to 4, **characterised in that** the coupling plate (22) and the base plate (21) are in one piece with one another.

6. Frame according to claim 5, **characterised in that** there extends, between the two plates (21, 22), a spring (27) which spring-loads them (16) in the spreading-open direction in relation to one another.

7. Frame according to claim 5 or 6, **characterised in that** the two plates (21, 22) consist of elastic material, such as spring steel, and are connected to one another at their inner ends (28, 29) by a bow-shaped spring (27) and form a structural unit (23) with two legs for the connector (20).

8. Frame according to one or more of claims 1 to 7, **characterised in that** the base plate (21) has supports (61, 62, 63) which extend transversely to the direction of the plate and are supported on the inner face of the cavity.

9. Frame according to claim 8, **characterised in that** the supports (61, 62, 63) consist of angled plate parts (61', 62', 63') which are preferably located on the outer and inner ends (29, 39) of the base plate (21).

10. Frame according to claim 8 or 9, **characterised in that** three supports (61, 62, 63) produce a three-point abutment of the base plate (21) against the inner face of the cavity.

11. Frame according to claim 10, **characterised in that** the three supports consist of an outer support (63) and two inner supports (61, 62),
of which the outer support (63) is disposed in the central region of the contact point (67) or of the inclined face (66),
while the two inner supports (61, 62) are disposed on either side of the bow-shaped spring (27) at the end.

12. Frame according to one or more of claims 1 to 11, **characterised in that** the head (31) of the pressure screw (30), which head is rotatably mounted in the transverse bore (15) in the profiled bar (12), possesses a head height (73) which is greater than/equal to the maximum travel of the folding-on movement (50) of the coupling plate (22) in relation to the base plate (21) between the full releasing location and the full engaging location of the hooked end (35).

13. Frame according to one or more of claims 1 to 12, **characterised in that** the base plate (21) has at least one outer plate prolongation (77) which protrudes out of the front face (14) of the profiled bar (12) in the situation in which the connector (20) is fitted, and which prolongation comes to rest laterally alongside the coupling hook (36) of the coupling plate (22),
and that the plate prolongation (77) protrudes into the groove (18) in the other profiled bar (11) in the coupling situation.

14. Frame according to claim 13, **characterised in that** the outer end (77') of the base plate (21) is forked, and the forked portion (79) produces two plate prolongations (77') which are mirror-inverted in relation to one another,
and that - in the situation in which the connector (20) is fitted - the hooked end (35) of the coupling plate (22) is disposed in the fork-type space (79).

15. Frame according to claim 13 or 14, **characterised in that** the plate prolongation (77) of the base plate has a lateral extension (75) which prevents a deviating movement of the hooked end (35) in the direction in which the groove extends in the other profiled bar (11).

16. Frame according to claim 15, **characterised in that** the extension (75) is produced by an angled tab (74) formed onto the plate prolongation (77).

17. Frame according to one of claims 13 to 16, **characterised in that** the plate prolongation (77) carries a nose (76) which protrudes laterally beyond the base plate (21) and which - in the situation in which the connector (20) is fitted - is supported on the front end (14) of the profiled bar (12) and determines the depth of installation of the said connector (20) in the cavity (13).

18. Frame according to claim 17, **characterised in that** the nose (76) is formed by the U-shaped folding-back of an end portion (78) of the plate prolongation (77).

19. Frame according to one or more of claims 1 to 18, **characterised in that** the angle of inclination (68) of the inclined face (66) located on the hooked end (35) of the coupling plate (22), and/or the location of the appertaining contact point (67) provided on the outer end (39) of the base plate (21), are adjustable.

20. Frame according to claim 19, **characterised in that** the contact point (67) is produced by a curved outer end (curving end 39) of the base plate (21), the arc of curvature (69) of which outer end can be varied (70) for adjusting the location of the contact point (67).

21. Frame according to claim 20, **characterised in that** the curving end (39) of the base plate (21) is longitudinally slotted (38) and produces a number of fingers (63, 64) which lie side by side and of which at least some (64) form the contact point (67).

22. Frame according to claim 21, **characterised in that** the direction of curvature (69) of the fingers (64) on the base plate (21) points away from the hooked end (35) of the coupling plate (21).

23. Frame according to claim 21 or 22, **characterised in that** one finger (63) is prolonged and, at the same time, forms the outer support of the base plate (21) which is supported - in the situation in which the connector (20) is fitted - on the inner face of the cavity of the profiled bar (12).

24. Frame according to one or more of claims 1 to 23, **characterised in that** the screw head (31) has a cylindrical superficies which is guided, and axially movable when the pressure screw (30) is rotated (34), in the hollow-cylindrical transverse bore (15) in the profiled bar (12).

## Revendications

1. Echaufadage (10), en particulier pour meuble, formé de barres profilées (11, 12), susceptibles d'être accouplées ensemble de façon désolidarisable à l'aide d'un connecteur (20, 20'), barres profilées dont au moins quelques unes présentent des rainures (18) à contre-dépouille, et d'autres présentent un espace creux (13) frontal pour recevoir le connecteur,
et le connecteur (20, 20') est formé d'au moins deux plaques (21, 22) profilées, placées l'une à côté de l'autre,
qui, précisément, sont poussées à l'écart l'une de l'autre à l'aide d'une force élastique (16), mais sont déplaçables l'une vers l'autre (50), avec diminution de leur espacement, par un actionnement en rotation (34) d'un organe de pressage (30, 30'), déplaçable transversalement par rapport à l'orientation des plaques (21, 22) profilées, l'organe de pressage (30, 30') agissant sur un point (55) défini sur l'une des plaques (21, 22),
où une première plaque, précisément une plaque d'accouplement (22), comporte une extrémité formant crochet (35) avec au moins un crochet d'accouplement (36), qui ressort de l'extrémité frontale (14) de la barre profilée (12) lorsque le connecteur (20, 20') est monté, et qui, pour assurer l'accouplement, s'engage dans la rainure (18) de l'autre barre profilée (11) et la saisit par l'arrière,
tandis que l'autre plaque, précisément une plaque de base (21), en cas de montage est placée de façon localement fixe dans l'espace creux (13) de la barre profilée (12),
**caractérisé en ce que**
les deux plaques (21, 22) présentent entre elles deux paires de profils de commande (56, 57; 66, 67), coopérant chaque fois, ayant leur direction longitudinale espacée l'une de l'autre,
les paires de profils de commande, lors de l'actionnement en rotation (34) de l'organe de pressage (30, 30'), provoquant deux déplacements (51, 52), différents l'un de l'autre de la plaque d'accouplement (22) par rapport à la plaque de base (21), précisément
- un déplacement longitudinal (51) de la plaque d'accouplement (22) par rapport à la plaque de base (21), ayant comme effet de tirer le crochet d'accouplement (36) contre l'extrémité frontale (14) de la barre profilée (12), déplacement longitudinal provoqué par la première paire de profils de commande (56, 57) en cas d'actionnement en rotation (34) de l'organe de pressage (30, 30') dans le sens du rapprochement des plaques (50), la première paire de profils de commande (56, 57) étant formée de la face oblique (56), disposée à proximité sur le point d'action (55) de l'organe de pressage (30, 30'), sur une plaque (22), et du point d'application (57) afférent sur l'autre plaque (21), et
- un déplacement transversal (52) de l'extrémité de crochet (35) de la plaque d'accouplement (22) par rapport à la plaque de base (21), ayant comme effet de faire pivoter le crochet d'accouplement (36) à l'encontre du sens d'approche des plaques (50), derrière la paroi de rainure (19), déplacement transversal qui - en cas d'accouplement des deux barres profilées (11, 12)- lors d'un actionnement en rotation (34) de l'organe de pressage (30, 30') dans le sens d'approche des plaques (50), est provoqué par la deuxième paire de profils de commande (66, 67), qui est formée de la face inclinée (66), inclinée en sens inverse par rapport à la face oblique (56), disposée à distance (65) du point d'action (55) de l'organe de pressage (30 ; 30'), sur une première plaque (22), et d'une zone de contact (67) afférente sur l'autre plaque (21).

2. Echafaudage selon la revendication 1, **caractérisé en ce que** l'organe de pressage (30, 30'), présentant une tige (32, 32') et une collerette (31, 31'), est ancré, avec possibilité de rotation par sa tige (32, 32'), précisément dans la plaque de base (21), mais traverse librement (24) la plaque d'accouplement (22),
**en ce que** l'extrémité de tige (31, 81) extérieure est montée à rotation dans un perçage transversal (15) de la barre profilée (12) et fixe la position de la plaque de base (21) dans l'espace creux (13) de la barre profilée (12)
et **en ce que** la collerette (31, 31') prend appui sur la face extérieure (26) de la barre d'accouplement (22).

3. Echafaudage selon la revendication 1 ou 2, **caractérisé en ce que** l'organe de pressage est formé d'une vis (30) avec une tige filetée (32) et une tête de vis (31) épaissie,
la tige filetée (32) s'engage dans un taraudage (25) de la plaque de base (21) et est susceptible d'y être vissée lors de l'actionnement en rotation (34),
et **en ce que** la tête de vis (31) prend appui sur la face extérieure (26) de la plaque d'accouplement (22).

4. Echafaudage selon la revendication 1 ou 2, **caractérisé en ce que** l'organe de pressage (30') présente une tige (32') exempte de filetage, munie d'une collerette (31'),
dont l'extrémité intérieure de tige (82) est ancrée sur la plaque de base (21), d'une manière permettant une rotation (34) mais axialement stationnaire,
**en ce que** la collerette (31') est conformée en coin rotatif (80) et présente, sur sa face intérieure de collerette (31'), une face de coin (83) du genre d'une hélicoïde qui prend appui sur un tronçon, coudé (tronçon coudé 84) de la plaque d'accouplement (22),
et **en ce que** l'extrémité extérieure (81) de la tige (32') s'encliquette au moyen de la charge exercée par une force élastique (16) agissant entre les deux plaques (21, 22), à la façon d'un bouton pression, dans le perçage transversal (15) de la barre profilée (12), lors du montage du connecteur (20').

5. Echafaudage selon les revendications 1 à 4, **caractérisé en ce que** la plaque d'accouplement (22) et la plaque de base (21) forment ensemble une seule pièce.

6. Echafaudage selon la revendication 5, **caractérisé en ce qu'**un ressort (27), qui charge élastiquement (16) les deux plaques (21, 22) dans le sens de l'ouverture par écartement l'une de l'autre, s'étend entre ces deux plaques.

7. Echafaudage selon la revendication 5 ou 6, **caractérisé en ce que** les deux plaques (21, 22) sont formées d'un matériau élastique, tel que de l'acier à ressort, et sont reliées ensemble à leurs extrémités de plaque (28, 29) intérieures au moyen d'un ressort (27) en forme d'étrier, et forment un ensemble de construction (23) à deux branches pour le connecteur (20).

8. Echafaudage selon l'une ou plusieurs des revendications 1 à 7, **caractérisé en ce que** la plaque de base (21) présente des appuis (61, 62, 63) s'étendant transversalement par rapport à la direction de la plaque et prenant appui sur la face intérieure de l'espace creux.

9. Echafaudage selon la revendication 8, **caractérisé en ce que** les appuis (61, 62, 63) sont formés de parties de plaques (61', 62', 63') coudées, se trouvant de préférence sur l'extrémité de plaque (29, 39) extérieure et intérieure de la plaque de base (21).

10. Echafaudage selon la revendication 8 ou 9, **caractérisé en ce que** trois appuis (61, 62, 63) produisent un appui à trois points de la plaque de base (21) sur la face intérieure de l'espace creux.

11. Echafaudage selon la revendication 10, **caractérisé en ce que** les trois appuis sont formés d'un appui extérieur (63) et de deux appuis intérieurs (61, 62),
dont l'appui extérieur (63) est disposé dans la zone médiane de la zone de contact (67) ou de la face inclinée (66),
tandis que les deux appuis intérieurs (61, 62) sont disposés des deux côtés du ressort (27) en forme d'étrier, situé côté extrémité.

12. Echafaudage selon l'une ou plusieurs de revendications 1 à 11, **caractérisé en ce que** la tête (31), montée à rotation dans le perçage transversal (15) de la barre profilée (12), de la vis de pressage (30) a une hauteur de tête (73) supérieure/égale à la course maximale de déplacement de rabattement (50) de la plaque d'accouplement (22) par rapport à la plaque de base (21), entre la pleine position de libération et la pleine position d'engagement de l'extrémité formant crochet (35).

13. Echafaudage selon l'une ou plusieurs des revendications 1 à 12, **caractérisé en ce que** la plaque de base (21) présente au moins un prolongement extérieur de plaque (77) qui, en cas de montage du connecteur (20), ressort de la face frontale (14) de la barre profilée (12) et vient se placer latéralement à côté du crochet d'accouplement (36) de la plaque d'accouplement (22),
et **en ce que** le prolongement de plaque (77), en cas d'accouplement, pénètre dans la rainure (18) de l'autre barre profilée (11).

14. Echafaudage selon la revendication 13, **caractérisé en ce que** l'extrémité de plaque (77') extérieure de la plaque de base (21) est fourchue et la bifurcation (79) produit deux prolongements de plaque (77'), conformés l'un par rapport à l'autre en répondant à une symétrie spéculaire,
et **en ce que** - lorsque le connecteur (20) est monté - l'extrémité formant crochet (35) de la plaque d'accouplement (22) est disposée dans l'espace de fourche (79).

15. Echafaudage selon la revendication 13 ou 14, **caractérisé en ce que** le prolongement de plaque (77) de la plaque de base présente un appendice (75) latéral, qui empêche tout déplacement d'échappement de l'extrémité formant crochet (35) dans la direction de la rainure de l'autre barre profilée (11).

16. Echafaudage selon la revendication 15, **caractérisé en ce que** l'appendice (75) est produit par une languette (74) coudée, formée d'un seul tenant sur le prolongement de plaque (77).

17. Echafaudage selon l'une ou plusieurs des revendications 13 à 16, **caractérisé en ce que** le prolongement de plaque (77) porte un ergot (76) qui ressort latéralement de la plaque de base (21) et - lorsque le connecteur (20) est monté - prend appui sur l'extrémité frontale (14) de la barre profilée (12) et détermine la profondeur d'insertion du connecteur (20) dans l'espace creux (13).

18. Echafaudage selon la revendication 17, **caractérisé en ce que** l'ergot (76) est formé par un repli en U d'un tronçon d'extrémité (78) du prolongement de plaque (77).

19. Echafaudage selon l'une ou plusieurs des revendications 1 à 18, **caractérisé en ce que** l'angle d'inclinaison (68) de la face inclinée (66) se trouvant à l'extrémité formant crochet (35) de la plaque d'accouplement (22) et/ou la position de l'emplacement de contact (67) afférent, sur l'extrémité extérieure (39) de la plaque de base (21), sont ajustables.

20. Echafaudage selon la revendication 19, **caractérisé en ce que** la zone de contact (67) est produit par une extrémité extérieure incurvée (extrémité courbée 39) de la plaque de base (21), dont l'arc d'incurvation (69) est modifiable (70) dans le but d'ajuster la position de la zone de contact (67).

21. Echafaudage selon la revendication 20, **caractérisé en ce que** l'extrémité d'incurvation (39) de la plaque de base (21) est munie d'une fente longitudinale (38) et produit plusieurs doigts (63, 64), situés les uns à côté des autres, dont au moins quelques uns d'entre eux (64) forment la zone de contact (67).

22. Echafaudage selon la revendication 21, **caractérisé en ce que** la direction d'incurvation (69) des doigts (64) sur la plaque de base (21) s'écarte de l'extrémité formant crochet (35) de la plaque d'accouplement (21).

23. Echafaudage selon la revendication 21 ou 22, **caractérisé en ce qu'**un doigt (63) est prolongé et forme en même temps l'appui extérieur de la plaque de base (21) qui prend appui - lorsque le connecteur (20) est monté - sur la face intérieure d'espace creux de la barre profilée (12).

24. Echafaudage selon l'une ou plusieurs des revendications 1 à 23, **caractérisé en ce que** la tête de vis (31) présente une face d'enveloppe cylindrique, guidée dans le perçage transversal (15) cylindrique creux de la barre profilée (12) et déplaçable axialement lors de la rotation (34) de la vis de pressage (30).
